# EUROPEAN PATENT APPLICATION

(11) **EP 4 717 935 A1**
(43) Date of publication of application: **01.04.2026**
(21) Application number: 24203754.7
(22) Date of filing: 30.09.2024
(51) Int. Cl.: F16B 21/07, F16B 5/06, F16B 21/09

(54) **A FASTENING ELEMENT FOR REVERSIBLE CONNECTION TO A STUD**

(71) Applicant: Newfrey LLC, New Britain, CT 06053 (US)
(72) Inventor: KEMPF, Christian, 35394 Giessen (DE); WILLERSHAUSEN, Jörg, 35394 Giessen (DE); BRUMM, Mathias, 35394 Giessen (DE); ROSEMANN, Frank, 35394 Giessen (DE); GRIEPENBURG, Ricardo, 35394 Giessen (DE)
(74) Representative: Haarpatent Patentanwälte Krämer Meyer

(57) **Abstract**

A fastening element (1) for reversible connection to a stud (11), comprises a base body (2) which forms in its interior a receptacle (10) defining a longitudinal axis for at least part of the stud (11). The fastening element (1) further comprising locking fingers (15a, 15b) which are mounted on the base and whose radially elastically designed free ends project into the receptacle (10), with a locking contour at the free end of the locking fingers (15a, 15b) for locking with a locking contour of the insertable stud (11). The stud (11) can be moved into a locking position in an axial direction with respect to the longitudinal axis through an input opening (13) arranged in the bottom (8) of the base body (2) and out of the locking position in a radial direction with respect to the longitudinal axis through an exit opening (14) in a first sidewall (6) of the base body (2). The free ends of the locking fingers (15a, 15b) run along a locking-finger axis and each having an end that is close to the exit opening (14) and an end that is close to a second sidewall (4) opposite the exit opening (14), wherein the distance between the ends of the locking fingers (15a, 15b) that are close to the exit opening (14) is smaller than the distance between the ends of the locking fingers (15a, 15b) that are close to the second sidewall (4).

## Description

The invention relates to a fastening element for reversible connection to a stud of a support part with a receptacle present in the fastening element, into which the stud can be brought in the axial direction via an input opening, and with locking fingers that can lock with the stud and hold it.

Fastening systems are used, for example, in car body construction. The fastening system is used to attach or mount add-on parts to a car body, for example the body of a passenger vehicle or a vehicle battery. The add-on parts can be trim parts, holders for electrical lines, fluid lines, etc. The fastening should be as simple as possible. In many cases, the fastening should also be removable without causing any damage. Furthermore, it is usually required that the fastening system compensate for dimensional deviations.

EP 3 839 273 A1 describes a clip for a fastening system of the genus corresponding to a structural component for fastening a structural component to a structural component carrier, wherein a bolt projects from a surface of the structural component carrier. The clip has a base body with a bolt receiver that is designed so that the fastening clip can be pushed onto the bolt. At least one radially elastic locking finger is arranged on the base body, which projects into the bolt receiver and is designed to engage with a locking contour of the bolt.

DE 10 2009 014 133 A1 describes a fastening clip for fastening a structural component to a bolt of a carrier part, with a base body that has an opening for the receptacle of the bolt, whereby the opening has an axis and, transverse to the axis, a fastening area and a release area lying next to each other. Springloaded holding means for holding the bolt are arranged in the fastening area and are designed in such a way that the bolt can be inserted into the fastening area in the direction of the axis and that the bolt located in the fastening area can be displaced into the unlocking area by a relative movement of the bolt and fastening clip perpendicular to the axis of the opening. In the unlocking area, the bolt can be removed from the opening.

EP 3 499 057A1 discloses a clip that can be placed on a bolt. An opening has a first and a second section that are assigned to an assembly and a disassembly position, respectively.

Bolts inserted into the fastening clip can be removed from the locking position in a movement perpendicular to the axial insertion direction, e.g. of the clip. The problem here is that the clip can be moved laterally into a position relative to the bolt in which the pull-off force is reduced. Removal of the clip from the bolt against the fastening direction would also be possible, depending on the position of the clip. A secure fastening is no longer guaranteed.

It is hence an object of the present invention to provide a secure fastening element, which prevents the unintentional disassembly after it has been installed.

To this aim, according to the invention, it is provided a fastening element according to claim 1. Preferred embodiments are described in the dependent claims.

A fastening element for reversible connection to a stud, comprising a base body which forms in its interior a receptacle defining a longitudinal axis for at least part of the stud, and comprising locking fingers which are mounted on the base and whose radially elastically designed free ends project into the receptacle, with a locking contour at the free end of the locking fingers for locking with a locking contour of the insertable stud, wherein the stud can be moved into a locking position in an axial direction with respect to the longitudinal axis through an input opening arranged in the bottom of the base body and out of the locking position in a radial direction with respect to the longitudinal axis through an exit opening in a first sidewall of the base body, characterized in that the free ends of the locking fingers run along a locking-finger axis and each have an end that is close to the exit opening and an end that is close to a second sidewall opposite the first sidewall, the distance between the ends of the locking fingers that are close to the exit opening being smaller than the distance between the ends of the locking fingers that are close to the second sidewall. The design according to the invention positions the fastening element, which is attached to a stud, in the direction of the second sidewall opposite the exit opening. This reduces the likelihood of unintentional removal of the stud in the direction of the exit opening, for example, by a lateral movement of the fastening element. Furthermore, it has been found that by placing the stud essentially close to the second sidewall, a higher pull-off force is required to remove the fastening element in the axial direction of the longitudinal axis of the stud. The fastening element according to the invention may also be referred to as fastener.

The position of the locking fingers in the base body can vary and be adapted to the application. However, it is preferred that the locking fingers are each fixed with their foot on opposite third and fourth sidewalls of the base body. The respective sidewall can also advantageously transition into the locking finger, creating a round transition between the respective sidewall and locking finger. This design has the advantage that it is easy to manufacture and provides the necessary stability, but also elasticity. It is preferred that the locking fingers extend radially from their base towards their free end along a transverse axis that runs perpendicular to the longitudinal axis.

The engagement with the stud can be improved by designing the locking fingers to be mirror-symmetrical to a plane that runs axially through the longitudinal axis, in accordance with a further development of the invention. As a result, both locking fingers engage essentially synchronously with the locking contour of the stud.

The fastening element can be made of plastic. Depending on the application of the fastening element, a plastic with the preferred properties can be selected. This can influence the rigidity of the fastening element and adapt it to its use. Advantageously, the fastening element is manufactured in one piece, for example in an injection molding process.

In one embodiment, it is provided that at least one retaining element is present on the base body, the first end of which is fixed to the base body and the second end of which is a free end, wherein the free end projects into the exit opening, wherein the retaining element is designed to be elastically movable in the radial direction with respect to the longitudinal axis, wherein the retaining element can be brought out of a basic position into an open position or a retaining position and the free second end is in a form-fitting manner with a stop in the retaining position, so that the exit opening can be blocked for the introduction of a stud into the receptacle. The preferred design prevents a stud from being re-installed unintentionally. After removal of the stud from the receptacle, the stud cannot be reintroduced into the assembly position through the exit opening, since the retaining element in the preferred embodiment blocks or prevents movement of the stud through the exit opening.

It is advantageous that the retaining element comprises at least one elastically designed area. The retaining element is designed to be radially movable. This movability can be achieved in different ways. For example, a partial area of the retaining element can have a hinge-like constriction that allows a free end of the retaining element to move in relation to a fixed end.

In one embodiment of the invention, the retaining element can be attached to the base body. In this regard, it can be advantageous if the first end of the retaining element is fixed to an end of a first locking finger that is close to the opening. In another embodiment, the free end of the retaining element can be radially pivotable around the end that is fixed to the base body. The retaining element can advantageously be moved from its basic position into an open position or a retaining position. In the retaining position, it can interact with a stop. The stop can, for example, be formed by a surface on the base body that lies within the effective range of the free end of the retaining element. However, it can also be advantageous if the stop is formed by a surface on the second locking finger, which is preferably within the effective range of the free end of the retaining element.

In a preferred embodiment, the base body comprises two retaining elements, wherein each retaining element is fixed at its first end to the end of a locking finger near the exit opening. In their basic position, the free ends of the retaining elements are particularly spaced apart. The distance can be determined by the manufacturing process or changed after manufacturing by machining the free ends. When the retaining elements in the preferred embodiment are moved to their open position, the distance between the free ends increases. When the retaining elements in the preferred embodiment are moved to their retaining position, the distance between the free ends is reduced. In their blocking position, the free ends of the retaining elements advantageously engage in a form-fitting manner with each other, so that movement along the transverse axis in the direction of the receptacle is prevented. In the preferred embodiment, in this form-fitting state, access through the exit opening into the receptacle is blocked.

In a further embodiment of the invention, the first end of the retaining element is fixed to the base body, while its free second end, which projects into the exit opening, is in form-fitting contact with a stop surface on a locking finger or the base body in the retaining position. In this embodiment, a retaining element is provided that abuts with its free end against a stop on the base body or on a locking finger. For example, the retaining element can extend from its first fixed end to the free end along a retaining element axis that is inclined with respect to the longitudinal axis of the receptacle. In this embodiment, the retaining element can also block access to the receptacle through the exit opening.

It may be advantageous for applications to reduce the weight of the base body, for example by eliminating solid components. According to one embodiment, the second sidewall of the base body opposite the exit opening can have apertures with reinforcing elements. Weight can be saved by the apertures. On the other hand, the rigidity of the sidewall can be increased by reinforcing elements. Such reinforcing elements can extend, for example, lengthwise, transversely or diagonally across the sidewall and can be designed, for example, as ribs or the like.

It is advantageous if the locking finger axes of the locking fingers are inclined relative to the transverse axis that runs perpendicular to the longitudinal axis. Furthermore, it is preferred that the ratio between the distance between the ends that are close to the sidewall and the distance between the ends that are close to the exit opening is at least 10:1, in particular 5:1. The ratio is calculated from the distance between the ends near the sidewall divided by the distance between the ends that are close to the exit opening. If the preferred minimum ratio of 10:1, especially 5:1, is not achieved, the distance between the ends may approach 1, which can have a negative effect on the positioning of the stud near the sidewall. On the other hand, an advantageous increase in the ratio shows that a sufficiently increased pull-off force remains guaranteed even when the fastening element moves sideways.

Furthermore, the invention relates to an arrangement comprising a stud fixed to a structural component and a fastening element as previously explained. The arrangement according to the invention can ensure a stable fastening of a fastening element to a stud, such as a bolt, for example. The stud can be attached to a structural component, e.g. a metal sheet of a body part. The fastening element can be attached to a structural component preferably by means of its head part. In a preferred embodiment, the stud comprises a head and the locking fingers of the fastening element cooperate with the head of the stud. For further details, it is referred to the advantages and designs of the fastening element explained above.

The invention will be explained in more detail below, with reference to an example of the invention shown in the drawing. It shows
- Figure 1: a perspective view of a design of a fastening element,
- Figure 2: a view of a design of a fastener from below,
- Figure 3: a side view of an embodiment of a fastener,
- Figure 4: a plate with an exemplary stud and
- Figure 5: a side view of a stud received in a fastening element.

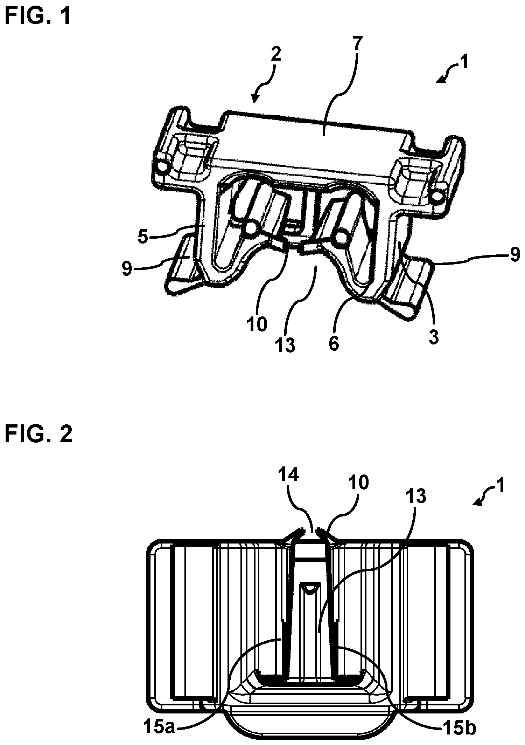

Figures 1, 2 and 3 show different views of a fastening element 1. The fastening element 1 comprises a base body 2, which, in the illustrated embodiment, has four sides/sidewalls 3, 4, 5, 6, a lid 7 and a base 8 and has a substantially rectangular basic shape. The sides/sidewalls are designated for instance as first sidewall 6, second sidewall 4, third sidewall 3 and fourth sidewall 5, with the second sidewall 4 being located between the third sidewall 3 and fourth sidewall 5 and being provided with apertures or recesses. The apertures or recesses can be used to reduce the weight. On the other hand, the visible ribs or struts that extend through the sidewall 4 can act as reinforcing elements and serve to increase the rigidity of the sidewall 4.

Protruding from the lid 7, two exemplary means are provided on the base body 2 with which the fastening element 1 can be attached to a structural component not shown. The component can be, for example, a panel of a vehicle door or similar. For the purposes of the invention, the lid 7 can also be referred to as the head part or head and is either present as a separate part that can be connected to the base body 2 or is manufactured in one piece with the base body 2. The base body 2 can be composed of several parts. However, it is advantageous if the base body 2 is a one-piece structural component made of plastic, which is manufactured, for example, in an injection molding process.

Elastically designed feet 9 are present on the two opposing sidewalls 3, 5 of the base body 2, in particular on their edges remote from the cover, on the outer contour of the base body 2, which, in the design shown, extend over the entire width of the base body 2. The feet 9 may, for example, be drop-shaped, with a thickened end remote from the base body. The feet 9 may be used for tolerance compensation during the assembly of the fastening element 1.

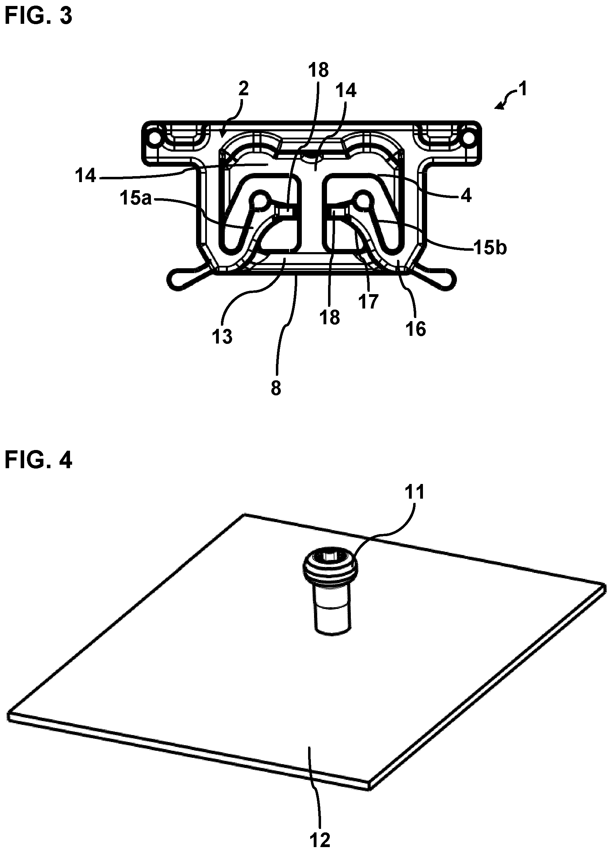

A cavity is provided in the base body 2, defined by the sidewalls 3, 4, 5, 6, the base 8 and the lid 7. The cavity forms a receptacle 10 for a stud 11, which is schematically indicated in Figure 4. The stud 11 can, for example, be a bolt with a substantially spherical or mushroom-shaped head, the shaft of which is fastened on another component, here an indicated plate 12. The plate 12 may, for example, be a structural component such as a panel of the vehicle body. The circumferential surface of the bolt head may have, at least in some areas, a latching contour, which, for example, has steps, edges or a roughened surface.

The receptacle 10 extends along a longitudinal axis from an entrance opening 13 to the lid 7. The cavity or receptacle 10 is accessible axially to the longitudinal axis via the input opening 13. Perpendicular to the longitudinal axis is a further opening, which is defined as an exit opening 14 for the purposes of the invention. Both the input and exit openings 13, 14 can be designed as recesses in the base 8 or a sidewall 3, 4, 5, 6 of the base body 2. In the design shown, the base 8 and the first sidewall 6, which is opposite the second sidewall 4, are essentially completely open. Of course, both openings 13, 14 are designed and sized so that a stud 11 can be passed through.

Locking fingers 15a, 15b are fixed to the inner walls of the two opposite sidewalls, namely the third and fourth sidewall 3, 5. The locking fingers 15a, 15b incline towards the longitudinal axis, namely from their foot part 16 fixed to the sidewall 3, 5 to their free head part 17 radially inwards. There is an acute angle between sidewall 3, 5 and locking finger 15a, 15b, which is preferably between 0° and 60°. Between the locking fingers 15a, 15b and the respective sidewall 3, 5, is a groove 18 whose width changes depending on the radial movement of the locking fingers 15a, 15b. The locking fingers 15a, 15b have a locking nose or a locking head with a locking contour on their head part 17, which is located at the free end of the locking fingers 15a, 15b and projects into the receptacle 10. The locking contours of the locking fingers 15a, 15b and those of the stud 11 are, to the knowledge of the person skilled in the art, matched to each other so that both contours can lock together. The free ends of the locking fingers 15a, 15b extend along an axis of the locking finger transverse to the longitudinal axis of the receptacle 10. Each of the locking fingers 15a, 15b has an end that is close to the exit opening 14 and an end that is close to the second sidewall 4. This means that one end of the free end of each locking finger 15a, 15b is close to the exit opening 14 and close to the sidewall 4. The locking finger axes of the free ends of the locking fingers 15a, 15b are not aligned parallel to each other, but are at an angle to each other, which can be clearly seen in Figure 2. In particular, the locking finger axes of the locking fingers 15a, 15b are inclined relative to the transverse axis running transversely to the longitudinal axis. The inclination or orientation of the locking finger axes is designed in such a way that the distance between the ends of the locking fingers 15a, 15b that are close to the exit opening 14 is smaller than the distance between the ends of the locking fingers 15a, 15b that are close to the sidewall 4. As a result, the receptacle for the stud 11, which is locked by the locking fingers 15a, 15b, is larger near the sidewall 4 than near the exit opening 14. It has been found to be advantageous if the ratio of the distances to one another does not fall below a value of 5:1, that is, if the distance between the ends of the locking fingers 15a, 15b that are close to the sidewall 4 is basically at least five times greater than the distance between the ends of the locking fingers 15a, 15b that are close to the exit opening 14.

The base body 2 is preferably designed to be symmetrical in mirror-image fashion to a plane that runs through the longitudinal axis. Thus, the locking fingers 15a, 15b are also designed to be symmetrical in mirror-image fashion in the design shown. A transverse axis runs perpendicular to the longitudinal axis, essentially perpendicular to a plane projected into the exit opening 14.

In the illustrated design, a retaining element 18 is arranged at the free end of the locking finger 15a, 15b, or more precisely at the end of the locking finger 15a, 15b near the exit opening 14. The retaining element 18 is rectangular in shape and is hinged by a narrow side to the end of the locking finger 15a, 15b. It is elastically movable axially to the transverse axis. To achieve this, the connection between the retaining element 18 and the locking finger 15a, 15b, for example, can have a material recess or a constriction. Furthermore, the retaining element 18 can taper towards its free end, which is opposite the end fixed to the locking finger 15a, 15b, so that the retaining element 18 acquires a certain elasticity over its length. Of course, elasticity can also be achieved by choosing the appropriate material. The preferred option is to manufacture a one-piece base body 2 that also includes the retaining element 18.

The retaining element 18 is inclined outwards with respect to an axis running through the head part 17 of the locking finger 15a, 15b or with respect to the transverse axis, so that both retaining elements 18 project beyond the first sidewall 6 containing the exit opening 14. The retaining elements 18 extend from the ends fixed to the locking fingers 15a, 15b to the free ends, inclined to the transverse axis.

The two opposing retaining elements 18 are in the illustrated position in a basic position in which there is a defined distance between their free ends, or more precisely between the free narrow sides. The retaining elements 18 can be moved out of the basic position into an open position or a retaining position opposite to the open position by a force acting on them. The respective force acts along the transverse axis, but in opposite directions. If the force acts along the transverse axis, essentially coming from receptacle 10 onto an inner surface of the retaining elements 18, the distance between the free ends of the retaining elements 18 is increased. If the force acts from the opposite direction, that is, along the transverse axis, but in the direction of receptacle 10 and on an outer surface of the retaining elements 18, the distance between the free ends is reduced to a point where the free ends strike against each other and form a form-fitting connection due to the geometric contact of the ends, which counteracts the applied force. In this blocking position, the free ends of the retaining elements 18 strike against each other. The inner surface of the retaining elements 18 points in the direction of the receptacle 10, whereas the outer surface lies on an outer side of the retaining elements 18 and points in the opposite direction.

In a further design, which is not shown, the base body 2 can only comprise one retaining element 18. The retaining element 18 can be fixed at one end to the base body 2, for example to a locking finger 15a, 15b or to a sidewall 3, 4, 5, 6 of the base body 2, and can project with its free end, which is opposite the fixed end, into the exit opening 14. This design can also be angled to the transverse axis so that the retaining element 18 protrudes through the sidewall 6 that houses the exit opening 14. However, it can also be designed so that a longitudinal axis of the retaining element is parallel to or in a plane projected onto the exit opening 14. The first retaining element 18 can also be moved from its basic position to its open position by a force acting on its inner surface. A force acting in the opposite direction on its outer surface, that is, along the transverse axis in the direction of the receptacle, causes the retaining element 18 to be moved from its basic position to a retaining position in which it strikes against a stop on the base body 2 and forms a form-fit. The stop can be formed by a partial surface of the basic body 2 or its components, e.g. a locking finger 15a, 15b, which is within the effective range of the retaining element 18, in particular its free end. In this design, the basic position can essentially correspond to the retaining position, provided that the retaining element 18 is already in its basic position on or near the stop. In principle, only a movement of the retaining element 18 in the direction of its open position is then possible. The design described here can also be provided with two retaining elements 18, in which case both retaining elements 18 form the form fit in the retaining position. In all other respects, reference is made to the previously explained designs.

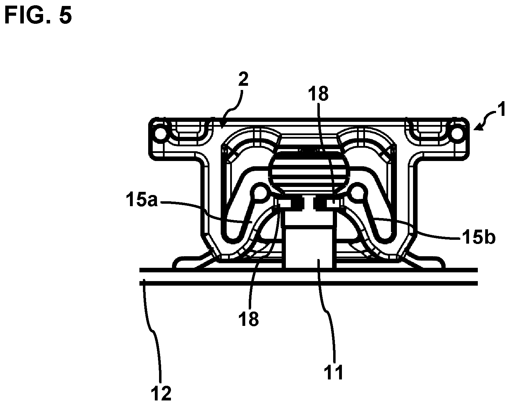

Figure 5 shows a side view of a stud 11 received in a fastening element 1. A fastening of the fastening element 1 to the stud 11 can be carried out as follows. The assembly can be carried out manually or automatically. The fastening element 1 can be attached beforehand to a structural component, such as a door panel, for example via its lid 7. The stud 11 can be present as a bolt on a body part. The fastening element 1 is moved with its input opening ahead in the direction of the stud 11. The stud 11 moves axially along the longitudinal axis of the receptacle 10 into the base body 2 by the fastening element 1 being pressed axially onto the stud 11. The spherical or mushroom-shaped head of the stud 11 pushes the free ends of the locking fingers 15a, 15b radially outwards until its widest point has passed the free ends of the locking fingers 15a, 15b and these engage behind the head. The stud 11 is now latched in the fastening element 1. Due to the fact that the distance between the ends of the locking fingers 15a, 15b near the sidewall 4 is increased and, in particular, is greater than the distance between the ends of the locking fingers 15a, 15b near the exit opening 14, the stud 11 is positioned near the sidewall 4. This prevents unintentional disassembly. By positioning the stud 11 close to the sidewall, the pull-off force required to remove the fastening element 1 in the axial direction from the stud 11 is increased, making the connection more secure and stable.

If the fastening element 1 is to be dismantled, the fastening element 1 is radially displaced so that the stud 11 is moved in the direction of the retaining elements 18. The stud 11 exerts a force on the inner surfaces of the retaining elements 18, which acts in the direction of the transverse axis, and pushes the retaining elements 18 radially outwards into their open position. The stud 11 slides past the retaining elements 18 through the exit opening 14. The fastening element 1 is disassembled from the stud 11. If there is an unintentional radial movement of the fastening element 1 and the stud 11 exerts force on the retaining elements 18, acting along the transverse axis in the direction of receptacle 10, the free ends of the retaining elements 18 are moved into their retaining position and strike against each other. This prevents the stud 11 from unintentionally entering the receptacle 10. This in turn prevents the unintentional re-assembly of the fastening element 1.

## Claims

1. A fastening element (1) for reversible connection to a stud (11), comprising a base body (2) which forms in its interior a receptacle (10) defining a longitudinal axis for at least part of the stud (11), and comprising locking fingers (15a, 15b) which are mounted on the base and whose radially elastically designed free ends project into the receptacle (10), with a locking contour at the free end of the locking fingers (15a, 15b) for locking with a locking contour of the insertable stud (11), wherein the stud (11) can be moved into a locking position in an axial direction with respect to the longitudinal axis through an input opening (13) arranged in the bottom (8) of the base body (2) and out of the locking position in a radial direction with respect to the longitudinal axis through an exit opening (14) in a first sidewall (6) of the base body (2),
**characterized in that** the free ends of the locking fingers (15a, 15b) run along a locking-finger axis and each have an end that is close to the exit opening (14) and an end that is close to a second sidewall (4) opposite the exit opening (14), the distance between the ends of the locking fingers (15a, 15b) that are close to the exit opening (14) being smaller than the distance between the ends of the locking fingers (15a, 15b) that are close to the second sidewall (4).

2. A fastening element (1) according to claim 1, **characterized in that** the locking fingers (15a, 15b) are each fixed by their foot part (16) to opposite third and fourth sidewalls (3, 5) of the base body (2).

3. A fastening element (1) according to claim 2, **characterized in that** the locking fingers (15a, 15b) extend radially from their foot (16) to their free end along a transverse axis extending transversely to the longitudinal axis.

4. A fastening element (1) according to one of the preceding claims, **characterized in that** at least one retaining element (18) is present on the base body (2), the first end of which is fixed to the base body (2) and the second end of which is a free end, wherein the free end projects into the exit opening (14), wherein the retaining element (18) is designed to be elastically movable in the radial direction with respect to the longitudinal axis, wherein the retaining element (18) can be brought out of a basic position into an open position or a retaining position and the free second end is in a form-fitting manner with a stop in the retaining position, so that the exit opening (14) can be blocked for the introduction of a stud (11) into the receptacle (10).

5. A fastening element (1) according to claim 4, **characterized in that** the first end of the retaining element (18) is fixed to the end of a first locking finger (15a, 15b) near the exit opening (14).

6. A fastening element (1) according to claim 4 or 5, **characterized in that** the base body (2) comprises two retaining elements (18) and each retaining element (18) is fixed by its first end to the end of a locking finger (15a, 15b) near the exit opening (14).

7. A fastening element (1) according to claim 4, **characterized in that** the first end of the retaining element (18) is fixed to the base body (2) and its free second end, which projects into the exit opening (14), is present in the retaining position with a stop surface on a locking finger (15a, 15b) or the base body (2) in a form-fitting manner.

8. A fastening element (1) according to claim 4, **characterized in that** the retaining element (18) extends from its first fixed end towards the free second end along a retaining element axis that is inclined with respect to the longitudinal axis of the receptacle (10).

9. A fastening element (1) according to one of the preceding claims, **characterized in that** a sidewall (4) of the base body (2) located opposite the exit opening (14) has apertures with reinforcing elements.

10. A fastening element (1) according to one of the preceding claims, **characterized in that** the fastening element (1) is made of plastic.

11. A fastening element (1) according to one of the preceding claims, **characterized in that** the fastening element (1) is manufactured in one piece.

12. A fastening element (1) according to one of the preceding claims, **characterized in that** the locking finger axes of the locking fingers (15a, 15b) are inclined relative to the transverse axis extending transversely to the longitudinal axis.

13. A fastening element (1) according to one of the preceding claims, **characterized in that** a ratio of at least 10:1, in particular 5:1, exists between the distance between the ends that are close to the sidewall and the distance between the ends that are close to the exit opening (14).

14. An arrangement comprising a stud (11) fixed to a structural component (12) and a fastening element (1) according to one or more of the previous claims.

15. Arrangement according to claim 14, wherein the stud (11) comprises a head and the locking fingers (15a, 15b) cooperate with the head of the stud (11).
